# EUROPÄISCHE PATENTSCHRIFT

(11) **EP 2 621 616 B1**
(45) Veröffentlichungstag und Bekanntmachung des Hinweises auf die Patenterteilung: **16.11.2016**
(21) Anmeldenummer: 11763705.8
(22) Anmeldetag: 30.09.2011
(51) Int. Cl.: B01D 71/02, B01D 67/00, C04B 35/52, C04B 35/524

(54) **KOHLENSTOFFMEMBRANEN**
CARBON MEMBRANES
MEMBRANES DE CARBONE

(30) Priorität: 01.10.2010 EP 10186132
(43) Veröffentlichungstag der Anmeldung: 07.08.2013
(73) Patentinhaber: BASF SE, 67056 Ludwigshafen am Rhein (DE)
(72) Erfinder: VOSS, Hartwig, 67227 Frankenthal (DE); THERRE, Jörg, 67551 Worms (DE); KALTENBORN, Nadine, 52072 Aachen-Richerich (DE); KAEMNITZ, Susanne, 07616 Rauschwitz (DE)
(86) Internationale Anmeldenummer: PCT/EP2011/067071
(87) Internationale Veröffentlichungsnummer: WO 2012/041998

(56) Entgegenhaltungen:
- WO-A1-00/53299
- US-B1- 6 503 295

## Beschreibung

Die Erfindung betrifft die Verwendung spezieller Polymerlösungen zur Herstellung von Kohlenstoffmembranen, die zur Gastrennung geeignet sind.

Der Einsatz von Kohlenstoffmembranen zur Gastrennung ist an sich bekannt. Dabei wird der Schichtebenen-Abstand des Graphits, der mit 3,35 Å im Größenordnungsbereich kleiner Gasmoleküle liegt, ausgenutzt.

Der durch die Pyrolyse von organischen Materialien synthetisierte Kohlenstoff wird als parakristalliner Kohlenstoff bezeichnet, da er mehr oder weniger starke Abweichung von der idealen Kristallstruktur zeigt. Er besitzt kleine periodische Bereiche, zeigt aber diffuse Röntgenreflexe und wird deshalb als röntgenamorph bezeichnet. Glasartiger mikroporöser Kohlenstoff besitzt mit 1,2 - 1,6 g/cm³ eine geringere Dichte als kristalliner Graphit mit 2,2 g/cm³ und eine enge Porengrößen-Verteilung. Aufgrund des hohen Anteils an offener Porosität eignet sich der Kohlenstoff ausgezeichnet als Adsorbens.

Amorphe oder mikrokristalline Kohlenstofffilme besitzen hohe chemische Inertheit. Sie bestehen aus sp²- und sp³-Bindungen und zeigen daher Eigenschaften, die zwischen denen von Graphit und Diamant liegen. Die graphitähnlichen Strukturen bestehen aus einer trubostratisch fehlgeordneten Schichtenfolge, in der die Mikrokristallite durch stark deformierte und fehlorientierte Graphitschichten verknüpft sind.

Über die genauen Bindungsverhältnisse im röntgenamorphen Kohlenstoff wurden in der Vergangenheit unterschiedliche Thesen aufgestellt. Robertson und O'Reilly haben ein Modell propagiert, in dem amorpher Kohlenstoff aus sp²-Bindungsclustern besteht, die über sp³-Bindungen miteinander vernetzt sind. Côté und Liu hingegen haben die These vertreten, dass amorpher Kohlenstoff allein aus sp²-Bindungen besteht, die dreidimensional vernetzt sind. Experimente haben die Vermutung von dispergierten quervernetzten sp²-Bindungen gestützt. Im amorphen und nanokristallinen Kohlenstoff liegt nach Lossy et al. eine Mischung aus sp²- und sp³-Bindungstypen vor. Wenn diese Cluster groß genug werden können nanokristalline Graphit- und Diamantstrukturen entstehen.

Beim Einsatz von nanoporösem Kohlenstoff als Membranwerkstoff können hohe Permeanzen mit gleichzeitig hoher Selektivität erreicht werden. Die Gaspermeation in Kohlenstoffmembranen ist einfacher als in Polymermembranen, da sich die Gase nicht im Kohlenstoff lösen. Man unterscheidet zwei Arten von Kohlenstoffmembranen: die molsiebende Kohlenstoffmembran (molecular sieve carbon membrane MSCM) und die adsorptionsselektive Kohlenstoffmembran (adsorptive selective carbon membrane ASCM). MSCM erlauben die Trennung von Gasgemischen mit unterschiedlichen Mole-küldurchmessern auf Grund des Größenausschlusses der größeren Molekülsorte.

Im Gegensatz dazu erlauben ASCM die Trennung von Gasgemischen mit ähnlichen Molekülradien oder sogar die Abtrennung größerer von kleineren Molekülen.

Dem Permeationsverhalten adsorbierbarer und nichtadsorbierbarer Gase liegen unterschiedliche Mechanismen zugrunde. Während die Permeation von nicht adsorbierenden Gasen im Idealfall als reine Gasdiffusion verstanden werden kann, wird die Permeation von adsorbierbaren Gasen von Oberflächendiffusionsprozessen bestimmt. In Gemischen aus adsorbierbaren und nichtadsorbierbaren Gasen wird die Permeation der nicht adsorbierenden Komponente durch die adsorbierten Gasmoleküle behindert. Die nicht adsorbierenden Gase müssen für die Diffusion durch die Membran zunächst eine Potentialbarriere überwinden. In der Realität treten Gasdiffusion und Oberflächendiffusion stets gleichzeitig auf. Die Trennung funktioniert durch die selektive Adsorption und Oberflächendiffusion einer Komponente auf die Niederdruckseite der Membran, wo sie schließlich desorbieren.

Abhängig vom Syntheseprozess wie Sinterung und milden Aktivierungsprozessen liegen die Porengrößen der MSCM im Bereich zwischen 2,8 - 5,2 Å. Die Porengrößen in ASCM sind mit 5 - 7 Å deutlich größer.

Ein weiterer entscheidender Vorteil des Kohlenstoffs ist die Möglichkeit einer gezielten Einstellung der Porengröße durch thermochemische Behandlung, die es ermöglicht, aus dem gleichen Ausgangmaterial Membranen mit unterschiedlichen Permeations-und Trenneigenschaften herzustellen. Kohlenstoffmembranen besitzen eine hohe chemische Beständigkeit gegenüber Säuren, Laugen und organischen Lösungsmitteln. Nanoporöse Kohlenstoffmembranen können im Vergleich zu Polymermembranen unter nichtoxidierenden Bedingungen bei hohen Temperaturen von bis zu 900 °C eingesetzt werden.

Ein Nachteil des Kohlenstoffs liegt in seiner begrenzten Beständigkeit gegenüber oxidierenden Medien und Wasserdampf. Außerdem sind Kohlenstoffmembranen brüchiger als Polymermembranen und können durch adsorbierende Gase wie z. B. Chlorgas verblocken. Die adsorbierten Gasmoleküle lassen sich bei Temperaturen ≥ 200 °C wieder entfernen. Die bevorzugten Prozesstemperaturen sollten daher in diesem Bereich liegen.

Einer der ersten Vertreter der Gruppe der glasartigen Kohlenstoffe ist die "Cellulose-Kohle", die durch pyrolytische Umwandlung von Cellulose in Kohlenstoff bei definierter Temperaturbehandlung entsteht.

Die Herstellung von Kohlenstofffasermembranen aus Cellulose-Fasern durch Pyrolyse ist beispielsweise in der EP-A-0 671 202 beschrieben.

Die WO 00/62885 beschreibt den Einsatz polymerer phenolischer Harze zur Ausbildung von Kohlenstoffmembranen, die zur Gastrennung geeignet sind. Die phenolischen Harze werden dabei in Methanol gelöst.

Die WO 01/97956 beschreibt die Herstellung nanoporöser Kohlenstoffmembranen durch Pyrolyse von ausgewählten Polymeren auf porösen Substraten. Als bevorzugte Polymere werden Polyforfurylalkohol, Polyvinylchlorid und Polyacrylnitril genannt. Diese werden mit Additiven, vorzugsweise Titandioxid, Siliciumdioxid-Zeolithen oder Polyethylenglykol vermischt und auf ein Substrat aufgetragen. Daran schließt sich die Pyrolyse an.

US 6,503,295 B1 beschreibt gemischte Matrixmembrane zur Abtrennung von Kohlendioxid aus Mischungen von Kohlendioxid und Methan sowie ein Verfahren zur Herstellung der Membran, indem diskrete Kohlenstoff-basierende Molekularsiebpartikel mit Größen zwischen etwa 0,5 µm bis etwa 5µm in einem Lösungsmittel dispergiert werden, mit einem Polymer überzogen werden, um anschließend ein weiteres Polymer zuzugeben, um diese Mischung dieser Polymerlösung zu einem Film zu gießen. Die verwendeten Kohlenstoff-basierenden Molekularsiebpartikel werden dadurch erhalten, dass ein flacher Polymerfilm pyrolysiert wird.

WO 00/53299 A1 beschreibt nanoporöse Kohlenstoffmembranen auf Trägern, wobei die porösen Kohlenstoffmembranen durch Pyrolyse von einem Furfurylalkohol-Harz erhalten werden.

Die EP-A-2 045 001 beschreibt den Einsatz von Phenolharzen, Melaminharzen, Harnstoffharzen, Furanharzen, Polyimidharzen oder Epoxidharzen sowie von Polyethylen, Cellulose basierten Harzen, gelöst in organischen Lösungsmitteln, zur Herstellung von Kohlenstoffmembranen durch Filmbildung und nachfolgende Pyrolyse des Harzes. Darüber hinaus beschreibt die EP-A-2 045 001 den Aufbau der Kohlenstoffmembran bestehend aus einem porösen Substrat, darauf folgenden porösen Keramikschichten und der Kohlenstoffschicht, wobei die letzte Zwischenschicht, auf die die Kohlenstoffmembran aufgebracht wird, aus einem TiO₂-Sol hergestellt wird und einen Porendurchmesser zwischen 0,3 und 20 nm aufweist. Weiterhin wurde die Membran nur für die Trennung von Wasser und Ethanol durch Pervaporation bei 75 °C getestet. Diese Prüfung lässt eine Eignung für die Gastrennung bei höheren Temperaturen nicht zu.

Als Precursoren für die Synthese isotroper Kohlenstofferzeugnisse werden in der Regel Polymere auf Kohlenwasserstoffbasis bevorzugt, die nach der Pyrolyse einen hohen Anteil an mikrokristallinem Kohlenstoff zurücklassen und sich unter Formstabilität zersetzen [1] [2] [3] [4]. Dies gilt auch für die Synthese von Kohlenstoffmembranen [5]. Bei Beschichtungen besteht hierbei der Vorteil, dass man über die Schichtdicke des Precursorpolymers die Schichtdicke der nach der Pyrolyse erhaltenen Kohlenstoffschicht besser einstellen kann. Die Zersetzung unter Formstabilität ist einerseits zur Beschichtung komplexer Supportgeometrien erwünscht, verhindert außerdem das Aufschmelzen [6] und die Umstrukturierung in die energetisch günstigere Form des Graphits sowie die Entstehung von Defekten (wie z.B. Pinholes), die durch entweichende gasförmige Zersetzungsprodukte hervorgerufen werden könnten [7]. Polymere wie Phenolharz oder Polyfurfurylalkohol sind daher für die Synthese von Kohlenstoffmembranen naheliegend [8] [9] [10], weil nach der Pyrolyse 35 Ma% bzw. 55 Ma% des Polymers als Kohlenstoff verbleiben [4] [3].
[1] E. Fitzer, "Thermischer Abbau von Polymeren bis zum elementaren Kohlenstoffein Weg zu Werkstoffen der Zukunft", Angew. Chem., 92, 375 - 386 (1980).
[2] E. Fitzer, "From polymers to polymeric carbon- A way to synthesize a large variety of new materials", Pure & Appl. Chem., 52, 1865 - 1882 (1980).
[3] H. Böder and E. Fitzer, "Neue Formen des Kohlenstoffs", Naturwissenschaften, 57, 29 - 36 (1970).
[4] A. Gardziella, L. Pilato and A. Knop, 2000.
[5] W. Koros and D. Vu, San Ramon, United States, 2002.
[6] P. Harris, University of Reading, Whiteknights, UK,2001.
[7] A. Soffer, D. Rosen, S. Saguee and J. Koresh, Deutschland, 1992.
[8] S. Saufi and Ismail AF, "Fabrication of carbon membranes for gas separation-a review", Carbon, 42, 241 - 259 (2004).
[9] A. Fuertes, "Effect of air oxidation on gas separation properties of adsorptionselective carbon membranes", Carbon, 39, 697 - 706 (2001).
[10] C.J. Anderson, S.J. Pas, G. Arora, S.E. Kentisch, A.J. Hill, S.I. Sandler and G.W. Stevens, "Effect of pyrolysis temperature and operating temperature on the performance of nanoporous carbon membranes", Journal of Membrane Science, [322], 19 - 27 (2008).

Vor dem Pyrolyseschritt werden die Polymermembranen oft einer physikalischen oder chemischen Vorbehandlung unterzogen. Unter physikalischer Vorbehandlung versteht man beispielsweise das Strecken von Hohlfasern. Zu den chemischen Behandlungsverfahren zählt beispielsweise die Behandlung mit Carbonisierungskatalysatoren wie Mineralsäuren oder die Behandlung mit Chemikalien wie Dimethylformamid zur Erzielung enger Porengrößenverteilungen. Eine weitere Vorbehandlungsmethode stellt die Behandlung an oxidierender Atmosphäre wie Luft bei erhöhter Temperatur dar.

Durch die Pyrolyse der synthetischen Polymere unter Inertgasatmosphäre entsteht hochporöser Kohlenstoff, dessen Porengrößen in Abhängigkeit der Art und Morphologie des Polymers und der Pyrolysebedingungen stark variieren können. Durch kontrollierte Wärmebehandlung kann die Porengröße der Kohlenstoffmembranen eingestellt werden. Die Pyrolysebedingungen haben einen wichtigen Einfluss auf die Trenneigenschaften des Kohlenstoffs. Aufheizrate, Pyrolysetemperatur und Pyrolysedauer sind definiert einstellbare Größen. Durch Zufuhr thermischer Energie werden die Bindungen im Polymer aufgebrochen, und es kommt zur Ausbildung der Kohlenstoffmembran. Die bekannten Membranen weisen noch nicht für alle Trennaufgaben ein geeignetes Eigenschaftsprofil auf. Teilweise können die Membranen nicht in reproduzierbarer Weise hergestellt werden, d. h. die Membraneigenschaften variieren je nach Charge.

Aufgabe der vorliegenden Erfindung ist die Bereitstellung eines zur Herstellung der Kohlenstoffmembranen geeigneten Polymers, wobei die erhaltenen Membranen die Nachteile des Standes der Technik vermeiden sollen und hervorragende Trenneigenschaften bei bester Reproduzierbarkeit zeigen sollen.

Die Aufgabe wird erfindungsgemäß gelöst durch Verwendung von Lösungen ethylenisch ungesättigter Polyester zur Herstellung von Kohlenstoffmembranen, die zur Gastrennung geeignet sind, wobei der ethylenisch ungesättigte Polyester Wiederholeinheiten aliphatischer Diole, aromatischer Dicarbonsäuren und ethylenisch ungesättigter Dicarbonsäuren aufweist und die aliphatischen Diole vorzugsweise C₂₋₁₂-Alkandiole, besonders bevorzugt C₂₋₆-Alkandiole, insbesondere C₂₋₄-Alkandiole sind und die darüber hinaus bevorzugt folgende Trenneigenschaften für die Wasserstoffabtrennung aus einem Gasgemisch bei Temperaturen zwischen 150 bis 450 °C aus Gemischgasmessungen ermittelt aufweisen:
Wasserstoffpermeanzen von ≥ 2 Nm³/m²/h/bar und Wasserstoffpermselektivitäten ≥ 30

| | |
|---|---|
| Definition Permeanz: | Fluss in Normkubikmeter Gas pro m² Membranfläche, Zeit und Druck, wobei als Druck (Triebkraft) die Partialdruckdifferenz zwischen Feed/Retentat und Permeat des entsprechenden Gases eingesetzt wird. |
| Definition Permselektivität: | Die Permselektivität ergibt sich dann aus dem Verhältnis der ermittelten Permeanzen. |

Die Herstellung von Kohlenstoffmembranen, die zur Gastrennung geeignet sind, umfasst die Schritte
a) Beschichten eines porösen Substrats mit einer Lösung ethylenisch ungesättigter Polyester,
b) Trocknen der Polyesterbeschichtung auf dem porösen Substrat durch Entfernen des Lösungsmittels, wobei das poröse Substrat ausgewählt ist aus porösen Metallen, porösen Keramiken, porösen Gläsern oder porösen Kompositen daraus,
c) Pyrolysieren der Polyesterbeschichtung auf dem porösen Substrat zur Ausbildung der Kohlenstoffmembran, die zur Gastrennung geeignet ist,
wobei jeder der Schritte a) bis c) oder die Sequenz der Schritte a) bis c) mehrfach durchgeführt werden kann.

Die Kohlenstoffmembranen sind nach dem vorstehenden Verfahren erhältlich.

Es wurde erfindungsgemäß gefunden, dass die Verwendung von Lösungen ethylenisch ungesättigter Polyester zu Kohlenstoffmembranen mit hervorragenden Trenneigenschaften und bester Reproduzierbarkeit führt.

Zudem wurde gefunden, dass bei Verwendung von Polyesterharzen als Precursor, die einen sehr hohen Zersetzungsgrad und demzufolge eine Kohlenstoffausbeute von nur 5 Ma% aufweisen, besonders leistungsfähige Kohlenstoffmembranen hergestellt werden können.

Die Herstellung der Membranen kann dabei nach den bekannten Verfahren erfolgen, wie sie beispielsweise in der eingangs zitierten Literatur beschrieben sind.

Der ethylenisch ungesättigte Polyester weist Wiederholeinheiten aliphatischer Diole, aromatischer Dicarbonsäuren und ethylenisch ungesättigter Dicarbonsäuren auf. Der erfindungsgemäß eingesetzte ethylenisch ungesättigte Polyester kann dabei ausgehend von aliphatischen Diolen, aromatischen Dicarbonsäureanhydriden und ethylenisch ungesättigten Dicarbonsäureanhydriden hergestellt werden.

Die aliphatischen Diole sind vorzugsweise C₂₋₁₂-Alkandiole, besonders bevorzugt C₂₋₆-Alkandiole, insbesondere C₂₋₄-Alkandiole. Dabei kann es sich um lineare oder verzweigte Alkandiole handeln, in denen die Hydroxylgruppen endständig oder nicht endständig sind. Bevorzugt werden lineare aliphatische Alkandiole eingesetzt, in denen die Hydroxylgruppen endständig oder nicht endständig sind. Speziell bevorzugt wird 1,2-Propandiol als Alkandiol eingesetzt.

Die ethylenisch ungesättigte Dicarbonsäure ist vorzugsweise Maleinsäure. Sie wird insbesondere zur Herstellung des ethylenisch ungesättigten Polyesters in Form von Maleinsäureanhydrid eingesetzt.

Die aromatischen Dicarbonsäuren können aus beliebigen geeigneten aromatischen Dicarbonsäuren ausgewählt sein. Es kann sich beispielsweise um Phthalsäure, Isophthalsäure oder Terephthalsäure handeln. Bevorzugt ist die aromatische Dicarbonsäure Phthalsäure, die zur Herstellung der ethylenisch ungesättigten Polyester als Phthalsäureanhydrid eingesetzt wird.

Im ethylenisch ungesättigten Polyester können Diole und Dicarbonsäuren in äquivalenten Mengen vorliegen. Vorzugsweise wird mit einem geringfügigen Diolüberschuss gearbeitet, so dass die erhaltenen Polyester mehr Alkoholendgruppen als Carbonsäureendgruppen aufweisen. Der Überschuss an Diol gegenüber Dicarbonsäure kann 1 bis 20 %, vorzugsweise 2 bis 10 %, insbesondere 3 bis 7 % betragen.

Aromatische Dicarbonsäuren und ethylenisch ungesättigte Dicarbonsäuren können in beliebigen geeigneten Molverhältnissen eingesetzt werden. Vorzugsweise werden aromatische Dicarbonsäuren und ethylenisch ungesättigte Dicarbonsäuren im Molverhältnis 0,1 : 1 bis 1 : 0,1, besonders bevorzugt 0,3 : 1 bis 1 : 0,3, insbesondere 0,09 : 1 bis 1 : 0,9 eingesetzt. Besonders bevorzugt wird mit äquimolaren Mengen an aromatischen Dicarbonsäuren und ethylenisch ungesättigten Dicarbonsäuren gearbeitet.

Aus den genannten Monomeren werden die ethylenisch ungesättigten Polyester unter den üblichen Bedingungen hergestellt, wobei die ethylenisch ungesättigten Gruppen der ethylenisch ungesättigten Dicarbonsäuren weitgehend erhalten bleiben sollen. Für die Herstellung der ethylenisch ungesättigten Polyester kann auf bekannte Verfahren verwiesen werden.

Erfindungsgemäß bevorzugt eingesetzte ethylenisch ungesättigte Polyester weisen ein Molekulargewicht im Bereich von 100 bis 2000 g/mol, besonders bevorzugt 200 bis 600 g/mol auf. Die Viskosität der Polyester beträgt vorzugsweise 4 mPas bis 200 mPas, besonders bevorzugt 10 bis 40 mPas.

Vorzugsweise enthält die Lösung ethylenisch ungesättigter Polyester zusätzlich ein vernetzendes ethylenisch ungesättigtes Monomer und einen Radikalbildner als Vernetzungsinitiator. Das vernetzende ethylenisch ungesättigte Monomer ist dabei vorzugsweise Styrol oder α-Methylstyrol. Als Radikalbildner können alle radikalischen Polymerisationsinitiatoren eingesetzt werden. Beispielsweise kann Dibenzoylperoxid als Radikalbildner eingesetzt werden. Beim Auftragen der Lösung ethylenisch ungesättigter Polyester auf das poröse Substrat ist der Polyester vorzugsweise noch nicht vernetzt oder höchstens so teilvernetzt, dass seine Fließfähigkeit erhalten bleibt.

Als Lösungsmittel kommen alle für Polyester geeigneten Lösungsmittel in Betracht, vorzugsweise Styrol, α-Methylstyrol oder Aceton.

Gemäß einer Ausführungsform der Erfindung wird das vernetzende ethylenisch ungesättigte Monomer als Lösungsmittel eingesetzt, d. h. bei Mitverwendung des ethylenisch ungesättigten Monomeren wird auf ein weiteres Lösungsmittel verzichtet. Bei geeigneter Einstellung der Viskosität des ethylenisch ungesättigten Polyesters kann ebenfalls gemäß einer Ausführungsform der Erfindung auf den Zusatz eines Lösungsmittels verzichtet werden. Dies ist insbesondere dann der Fall, wenn der ethylenisch ungesättigte Polyester bei Umgebungstemperatur (22 °C) fließfähig ist.

Besonders bevorzugt wird der ethylenisch ungesättigte Polyester zusammen mit dem vernetzenden ethylenisch ungesättigten Monomer ohne den Zusatz weiterer Lösungsoder Verdünnungsmittel in der Beschichtung in Schritt a) eingesetzt.

Dabei beträgt der Anteil des vernetzenden ethylenisch ungesättigten Monomeren am Gemisch aus ethylenisch ungesättigtem Polyester und ethylenisch ungesättigtem Monomer vorzugsweise 0,1 bis 5 Gew.-%, besonders bevorzugt 0,2 bis 2 Gew.-% oder vorzugsweise 20 bis 100 Gew.-%, besonders bevorzugt 40 bis 80 Gew.-%.

Das poröse Substrat kann durch beliebige geeignete Beschichtungsverfahren mit der Lösung ethylenisch ungesättigter Polyester beschichtet werden. Die Lösung kann durch Eintauchen, Aufsprühen, Imprägnierungsverfahren usw. aufgebracht werden. Bevorzugt wird ein Dipcoating-Verfahren zum Aufbringen der Lösung ethylenisch ungesättigter Polyester eingesetzt. Das Aufbringen des ethylenisch ungesättigten Polyesters kann ferner durch Ink-Coating und Ultraschallbeschichtung (Ultrasonic Deposition, UD) erreicht werden. Entsprechende Verfahren sind beispielsweise in EP-A-2 045 001 und WO 01/97956 beschrieben.

Nach dem Beschichten des porösen Substrats mit der Lösung ethylenisch ungesättigter Polyester wird die Polyesterbeschichtung auf dem porösen Substrat getrocknet. Dabei wird gegebenenfalls vorhandenes Lösungsmittel entfernt. Bei der Mitverwendung eines vernetzenden ethylenisch ungesättigten Monomeren werden überschüssige Mengen dieses Monomers ebenfalls beim Trocknen entfernt. Das Trocknen wird vorzugsweise bei einer Temperatur im Bereich von 0 bis 70 °C, besonders bevorzugt 17 bis 30 °C, insbesondere bei Umgebungstemperatur (22 °C), für einen Zeitraum von 0,1 bis 50 Stunden, vorzugsweise 2 bis 24 Stunden, durchgeführt.

Vor dem Pyrolysieren in Schritt c) kann nach dem Trocknen b) oder als Teil des Trocknens ein Aushärten bei leicht erhöhten Temperaturen durchgeführt werden. Vorzugsweise wird bei Temperaturen im Bereich von 20 bis 150 °C oder 50 bis 250 °C, besonders bevorzugt 60 bis 100 °C für einen Zeitraum von 1 bis 100 Stunden oder 4 bis 20 Stunden, vorzugsweise 6 bis 24 Stunden oder 6 bis 12 Stunden ausgehärtet. Bei der Aushärtung wird der ethylenisch ungesättigte Polyester vernetzt. Die Vernetzung verhindert das Aufschmelzen und somit auch die Umstrukturierung des vernetzten Polyesters in den energetisch günstigeren Zustand des Graphits.

Vor dem Pyrolyseschritt können die Polymermembranen auch einer physikalischen oder chemischen Vorbehandlung unterzogen werden. Zu den chemischen Vorbehandlungsverfahren zählen beispielsweise die Behandlung mit Carbonisierungskatalysatoren wie Mineralsäuren oder die Behandlung mit Chemikalien wie Dimethylformamid zur Erzielung enger Porengrößenverteilungen. Additive wie Polyethylenglykol, LewisSäuren und ionische Salze sind in der eingangs zitierten Literatur, insbesondere in EP-A-0 671 202 beschrieben. Eine derartige Vorbehandlung kann auch erfolgen, ist oftmals jedoch nicht notwendig, da bereits durch Einsatz der erfindungsgemäß verwendeten Polyester eine geeignete Porengrößenstruktur erhalten wird. Weitere geeignete Porenbildner sind SO₃NH(C₂H₅)₃, Salpetersäuretriethylammoniumsalz und (-C(CF₃)₂-)Hexafluorisopropyliden-Gruppen. Über die Art und Menge der Porenbildner lässt sich die Permeabilität der Membran steuern.

Zum Zeitpunkt der Pyrolyse sind die erfindungsgemäß eingesetzten Polyester vorzugsweise entweder schon quervernetzt oder härten im Niedertemperaturbereich der Pyrolyse aus. Vor der Vernetzung sollten vorzugsweise alle Lösungsmittel aus der Polymerbeschichtung entfernt werden, da diese beim Erhitzen zur Blasenbildung und zu Defekten in der Polymerschicht führen können. Vernetzungsgrad und Vernetzungstemperatur können einen Einfluss auf die Permeabilität und Selektivität der späteren Membran haben.

Das Pyrolysieren der Polyesterbeschichtung auf dem porösen Substrat zur Ausbildung der Kohlenstoffmembran in Schritt c) wird vorzugsweise unter Inertgas bei Temperaturen im Bereich von 500 bis 900 °C, besonders bevorzugt von 650 bis 750 °C durchgeführt. Dabei wird die Pyrolyse vorzugsweise für einen Zeitraum von 0,1 bis 24 Stunden, bevorzugt 0,5 bis 17 Stunden, besonders bevorzugt 1 bis 10 Stunden, insbesondere 1 bis 2 Stunden, durchgeführt.

Unter Umständen kann es sinnvoll sein, die Pyrolyse in Gegenwart geringer Mengen sauerstoffhaltiger Gase durchzuführen. Bevorzugt wird die Pyrolyse jedoch unter Inertgas, beispielsweise unter Stickstoff- und/oder Argonatmosphäre durchgeführt.

Durch die Pyrolyse entsteht hochporöser Kohlenstoff, dessen Porengrößen in Abhängigkeit der Art und Morphologie des Vorläufers und der Pyrolysebedingungen variiert werden können. Durch kontrollierte Wärmebehandlung kann die Porengröße der Kohlenstoffmembran eingestellt werden. Die Pyrolysebedingungen haben einen Einfluss auf die Trenneigenschaften der erhaltenen Kohlenstoffmembran. Aufheizrate, Pyrolysetemperatur und Pyrolysedauer sind dabei einstellbare Größen. Durch Zufuhr thermischer Energie werden die Bindungen im Polymer aufgebrochen. Während der Zersetzung des Polymers bildet sich eine Reihe von gasförmigen Nebenprodukten, wodurch ein starker Masseverlust eintritt.

Nach der Pyrolyse kann die erhaltene Kohlenstoffmembran, falls erforderlich und gewünscht, weiteren Behandlungsschritten unterzogen werden. Beispielsweise kann die Membran durch Wärmebehandlung an Luft bei Temperaturen von 100 °C bis 500 °C aktiviert werden. Auch eine Aktivierung in einem Kohlendioxid-Strom ist möglich. Bevorzugt wird jedoch keine derartige Nachbehandlung nach der Pyrolyse in Schritt c) durchgeführt, sondern die aus der Pyrolyse resultierenden Kohlenstoffmembranen sind direkt zur Gastrennung geeignet.

Die Kohlenstoffmembran weist vorzugsweise einen mittleren Porendurchmesser im Bereich von 0,1 bis 0,7 nm oder 0,25 bis 0,4 nm, besonders bevorzugt 0,25 bis 0,45 nm, insbesondere 0,3 bis 0,4 nm auf. Diese Membranen lassen vorzugsweise nur Moleküle mit einem kleineren kinetischen Gasdurchmesser, die in das Porensystem der Membran eindringen können, passieren. Dabei handelt es sich insbesondere um Wasserstoff, Wasser, Ammoniak und Helium. Der Mechanismus der Trennung dieser Gase erfolgt dabei nicht über ein unterschiedliches Adsorptions- und Transportverhalten der zu trennenden Gase, sondern durch formselektive Trennung (Molecular Sieving). In diesem Fall ist gewährleistet, dass der Fluss der permeierenden Gase linear mit der treibenden Kraft ansteigt.

Besonders bevorzugt werden folgende Abtrennungen durch die Kohlenstoffmembran bewirkt, gegebenenfalls in Kombination mit chemischen Reaktionen zur Verschiebung des Gleichgewichts:
Abtrennung von Wasserstoff von Kohlenwasserstoffen ab C₁ aufwärts, beispielsweise bei Dehydrierungen.

Dabei werden Anwendungstemperaturen im Bereich von 200 bis 500 °C angestrebt.

Die Kohlenstoffmembranen werden bevorzugt in Form von asymmetrischen Membranen hergestellt. Die Wahl des porösen Substrats (Trägers) hängt zum einen von der chemischen Reaktivität und Kompatibilität mit dem Kohlenstoff, der mechanischen Stabilität, aber auch von ökonomischen Faktoren wie Kosten und Verfügbarkeit ab. Als poröse Substrate eignen sich poröse Werkstoffe wie poröse Metalle, poröse Keramiken, poröse Gläser oder poröse Komposite daraus.

Besonders bevorzugt weist das poröse Substrat eine mesoporöse keramische Oxidschicht aus TiO₂, ZrO₂, Al₂O₃, SiO₂ oder Mischungen daraus auf, die mit der Lösung des ethylenisch ungesättigten Polyesters beschichtet wird.

Besonders bevorzugt ist die mesoporöse keramische Oxidschicht aus γ-Al₂O₃ aufgebaut.

Dabei weist die mesoporöse keramische Oxidschicht eine Einbrenntemperatur auf, die unterhalb der Pyrolysetemperatur in Schritt c) liegt. Vorzugsweise wird diese mesoporöse keramische Oxidschicht in ungebrannter Form mit der Lösung des ethylenisch ungesättigten Polyesters beschichtet, wobei das Brennen der mesoporösen keramischen Oxidschicht gleichzeitig mit der Pyrolyse erfolgt. Dies kann zu einem besonders vorteilhaften Eigenschaftsspektrum der erhaltenen Kohlenstoffmembran führen.
Beim Einsatz von Stahl als Trägermaterial zeigt sich der Vorteil einer standardisierten, gut beherrschbaren und reproduzierbaren Fertigung. Bei der Verwendung von Stahl ist es jedoch nicht möglich, poröse Träger aus einem Schichtverbund herzustellen, was hohe Permeabilitäten und Selektivitäten miteinander kombinieren ließe.
Daher sind Kohlenstoffmembranen auf keramischen porösen Trägern bevorzugt. Sie bestehen vorzugsweise aus einem Verbund immer feiner werdender Schichtdicken und Porengrößen. Da Defekte in der Oberfläche der Substrate Fehler in der Kohlenstoffmembran wie Nadelstiche hervorrufen können, die zum Verlust der Mol-siebenden Eigenschaften der Membran führen können, ist es vorteilhaft, durch Beschichtung des porösen Trägers mit Zwischenschichten die Oberflächentopographie und die Defektstruktur des Trägers zu reduzieren.

Der prinzipielle Aufbau der Membran ist in der EP-A-2 045 001 beschrieben. Es kann insbesondere auf die dortige Figur 1 mit den entsprechenden Erläuterungen in der Beschreibung verwiesen werden.
Auf dem bevorzugten grobporigen Al₂O₃-Träger liegt vorzugsweise nach einer kleinerporigen Schicht eine mesoporöse keramische Oxidschicht aus γ-Al₂O₃ mit einem Porendurchmesser im Bereich von vorzugsweise 2 bis 10 nm , besonders bevorzugt 3 bis 7 nm , insbesondere bevorzugt 4 bis 6 nm . Die Schichtdicke dieser mesoporösen keramischen Oxidschicht beträgt vorzugsweise 0,1 bis 10 µm, besonders bevorzugt 0,5 bis 5 µm, insbesondere 1 bis 2 nm, speziell 1 bis 1,5 nm.

Dadurch, dass der Porendurchmesser im porösen Substratquerschnitt zur Kohlenstoffmembran hin abnimmt, kann ein Druckverlust im porösen Substrat vermieden werden, bei gleichzeitiger Einstellung geeigneter Porengrößen in der Kohlenstoffmembran. Durch diese Auslegung der Membran können hohe Stoffflüsse durch die Membran bei der jeweiligen Trennaufgabe gewährleistet werden.

Die Erfindung wird durch die nachstehenden Beispiele näher erläutert.

### Beispiele

### Beispiel 1

Die Herstellung der Precursorlösung erfolgte durch Reaktion eines Diols mit mindestens einer ungesättigten Carbonsäure zu einem ungesättigten Polyester und anschließende Zugabe eines Olefins. Im konkreten Fall wurden in einem 250 ml Zweihalskolben 19,98 g 1,2-Propandiol (0,25 mol + 5 % Überschuss; VWR), 12,26 g Maleinsäureanhydrid (0,125 mol; VWR) und 18,52 g Phthalsäureanhydrid (0,125 mol; VWR) eingewogen. Anschließend wurden 0,01 g Hydrochinon (VWR) als Polymerisationsinhibitor zugesetzt, um vorzeitige Polymerisations- oder Vernetzungsvorgänge zu verhindern. Unter Stickstoff wurden die eingewogenen Rohstoffe mittels Ölbad auf eine Reaktionstemperatur von 200 °C erhitzt. Zur Kontrolle der Kettenbildung wurde in regelmäßigen Abständen die Säurezahl durch Titration mit KOH-Lösung bestimmt. Bei einer Säurezahl von ca. 50 wurde die Reaktion durch schnelles Abkühlen auf 140 °C abgebrochen. Mit Hilfe eines Tropftrichters wurden anschließend unter heftigem Rühren innerhalb von einer Minute 50 g Styrol als Vernetzer zugegeben. Das zugesetzte Styrol wurde vorher auf 50 °C erwärmt. Um eine vorzeitige Polymerisation des Polyester-Styrol-Gemisches zu verhindern, wurde die ungesättigte Polyesterharzlösung im Wasserbad auf Raumtemperatur abgekühlt. Danach wurde dem Polyester-StyrolGemisch 1 % Dibenzoylperoxid (VWR) als Radikalbildner zugesetzt und anschließend 5 Minuten bei Raumtemperatur gerührt.

Als Träger für die Membranen wurden keramische Einkanalrohre aus α-Al₂O₃ einer Länge von 105 mm mit einem Innendurchmesser von 7 mm und einem Außendurchmesser von 10 mm verwendet, die auf der Innenseite Zwischenschichten mit abnehmender Porengröße besaßen. Die oberste Zwischenschicht wurde eine γ-Al₂O₃-Schicht mit einer Porengröße von 5 nm und einer Dicke von 1 - 2 µm eingesetzt. Diese wurde im Dipcoating-Verfahren mit der klaren, viskosen, leicht gelblich gefärbten Precursorlösung beschichtet. Dazu wurde die Lösung in das Rohr gefüllt und nach einer Verweilzeit von 1 Minute wieder abgepumpt. Die Probe wurde 24 h an Luft getrocknet und anschließend im Trockenschrank bei einer Temperatur von 80 °C für 12 h in Luft ausgehärtet und auf Raumtemperatur abgekühlt.

Nach der Vernetzung des Polymers zum Duroplasten wurde die Schicht mit folgender Prozedur zu Kohlenstoff pyrolysiert:
- 1.: Erhöhung der Temperatur mit 0,5 K/min von Raumtemperatur auf 380 °C in Stickstoff,
- 2.: Haltezeit von 1 h bei 380 °C in Stickstoff,
- 3.: Erhöhung der Temperatur mit 0,6 K/min von 380 auf 500 °C in Stickstoff,
- 4.: Haltezeit von 10 min bei 500 °C in Stickstoff,
- 5.: Wechsel der Atmosphäre von Stickstoff auf Argon,
- 6.: Erhöhung der Temperatur mit 1 K/min von 500 °C auf die finale Pyrolysetemperatur in Argon,
- 7.: Haltezeit von 1 h bei der finalen Pyrolysetemperatur in Argon,
- 8.: Abkühlung mit 5 K/min von der finalen Pyrolysetemperatur auf 500 °C in Argon,
- 9.: Wechsel der Atmosphäre von Argon auf Stickstoff,
- 10.: Abkühlung mit 5 K/min von 500 °C auf Raumtemperatur in Stickstoff.

Die Zusammensetzung des Polyesters, der Vernetzeranteil und die finale Pyrolyse-temperatur sind der Ergebnistabelle des Beispiels 4 zu entnehmen.

### Beispiel 2

Verfahren nach Beispiel 1 unter Variation der Verhältnisse der Edukte Maleinsäureanhydrid/Phthalsäureanhydrid/1,2-Propandiol im Bereich zwischen 0,2/0,05/0,25 mol und 0,07/0,43/0,5 mol.

### Beispiel 3

Verfahren nach Beispiel 1 unter Verwendung einer mesoporösen γ-Al₂O₃-Schicht, die bei 300 °C, 500 °C und 650 °C gesintert wurde.

Zur Charakterisierung der Trenneigenschaften der Kohlenstoffmembranen aus Beispiel 1 bis 3 wurden an einem Gasmessstand Einzel- und Gemischgasmessungen bei einer Temperatur von 150 °C durchgeführt. Die Permeationsmessung der Einzelgase wurde mit Hilfe der Druckanstiegsmethode durchgeführt, wobei sich die Permeanz hierbei aus dem linearen Druckanstieg über der Zeit ermitteln lässt. Die Gemischgasmessungen wurden mit einem H₂/C₃H₈-Gemisch, bestehend aus 80 Vol% Wasserstoff und 20 Vol% Propan, bei einem Transmembrandruck von 1,5 bar (Feeddruck 2,5 bar; Permeatdruck 1,0 bar abs.) durchgeführt. Dabei wurde der Gesamtfluss mit Hilfe eines Gasblasenzählers gemessen und die Permeanzen mit Hilfe des Feed- und Permeatdruckes für H₂ und Propan aus der Zusammensetzung des Feeds, Retentates und Permeates berechnet. Die Permeanz gibt dem Fluss pro m² Membranfläche, Zeit und Druck, wobei als Druck die Partialdruckdifferenz (Triebkraft) des entsprechenden Gases eingesetzt wird. Die Permselektivität ergibt sich dann aus dem Verhältnis der beiden ermittelten Permeanzen.

**Tabelle 1**

| Membran | Einbrenn-Temperatur der Trägermembran | Precursor | Dicarbonsäure | | Vernetzer | Vernetzung | | Pyrolyse | | Einzelmessungen | | | Gemischmessung | |
|---|---|---|---|---|---|---|---|---|---|---|---|---|---|---|
| | | | (Mol %) | (Mol %) | Styrol | Temperatur | Dauer | Temperatur | Dauer | Permeanz (Nm³/m²/h/bar) | | | Permeanz (Nm³/m²/h/bar) | Permselektivität |
| | (°C) | | Ma | Pa | (Gew %) | (°C) | (h) | (°C) | (h) | H2 | C3 | SF6 | H2 | H2/C3 |
| PES-1 | ungesintert | PES | 25 | 25 | 50 | 80 | 12,0 | 650 | 1,0 | 10,2 | 0,062 | 0,030 | 6,9 | 41 |
| PES-2 | 300 | PES | 25 | 25 | 50 | 80 | 12,0 | 700 | 1,0 | 4,7 | 0,007 | | 4,0 | 362 |
| PES-3 | 500 | PES | 25 | 25 | 50 | 80 | 12,0 | 650 | 1,0 | 6,8 | 0,006 | 0,002 | 5,6 | 418 |
| PES-4 | 500 | PES | 25 | 25 | 50 | 80 | 12,0 | 700 | 1,0 | 5,7 | 0,002 | | 4,8 | 68884 |
| PES-5 | 500 | PES | 7 | 43 | 50 | 80 | 12,0 | 700 | 1,0 | 4,6 | 0,069 | 0,034 | 3,1 | 19 |
| PES-6 | 500 | PES | 40 | 10 | 50 | 80 | 12,0 | 700 | 1,0 | 3,1 | 0,000 | 0,000 | 2,5 | 29703 |
| PES-7 | 500 | PES | 25 | 25 | 50 | 80 | 4,5 | 750 | 1,0 | 2,3 | 0,001 | 0,000 | 3,1 | 767 |
| PES-8 | 500 | PES | 25 | 25 | 50 | 80 | 12,0 | 700 | 1,0 | 6,2 | 0,002 | 0,001 | 4,2 | 594 |
| PES-9 | 500 | PES | 25 | 25 | 50 | 250 | 1,0 | 750 | 1,0 | 7,6 | 0,006 | 0,003 | | |

### Beispiel 4

Die Herstellung der Precusorlösung (Polyester: 25 Mol.-% Maleinsäureanhydrid, 25 Mol.-% Phthalsäureanhydrid und 50 Mol.% 1,2-Propandiol; Lösung: 50 Gew.-% PES und 50 Gew.-% Styrol), der für die Beschichtung eingesetzte Träger (oberste Zwischenschicht: Bohmitsol bei 500 °C gesintert), die Beschichtung mit der Precursorlösung, die Trocknung (24 h bei Raumtemperatur an Luft), die Vernetzung (12 h bei 80 °C in Luft), die finale Pyrolyse (1 h bei 650 °C in Ar) erfolgte wie im Beispiel 1 detailliert beschrieben.

Zur Untersuchung der Trenneigenschaften der Kohlenstoffmembranen wurden an einem Teststand Gemischgasmessungen bei Temperaturen zwischen 150 und 450 °C sowie bei Feeddrücken zwischen 1 und 10 bar absolut durchgeführt. Die Messungen erfolgten mit einem H₂/C₃H₈-Gemisch, bestehend aus ca. 50 Vol-% Wasserstoff und 50 Vol-% Propan, der Permeatdruck betrug ca. 1 bar absolut. Gemessen wurden der Retentat- und Permeat-Gesamtfluss mit Hilfe von Gasuhren sowie die Gaszusammensetzung vom Feed, Retentat und Permeat mittels eines online Gaschromatographen. Daneben wurden die Drücke und Temperaturen aufgezeichnet. Die Berechnung der Einzelflüsse (Dimension = Nm³/h/m²; Nm = Normkubikmeter) erfolgte aus dem Gesamtfluss und der Zusammensetzung des Permeates. Die Permeanzen (Fluss normiert auf die Triebkraft, Dimension = Nm³/h/m²/bar, Triebkraft = Partialdruckdifferenz zwischen Feed/Retentat und Permeat) ergeben sich dann mit den Zusammensetzungen vom Feed/Retentat und vom Permeat sowie den zugehörigen Drücken. Die Permselektivität ergibt sich aus dem Verhältnis der beiden ermittelten Permeanzen.

Die Tabelle 2 zeigt die gemessenen und berechneten Daten der Membran unter verschiedenen Bedingungen:
I: Variation des Feed-/Retentatdruckes zwischen 2,6 und 10,2 bar absolut bei 300 °C
II: Variation der Temperatur zwischen 200 und 350 °C bei einem Feed-/Retentatdruck von 7,1 bar absolut.

Die Ergebnisse zeigen, dass bei konstanten Temperatur von 300 °C mit Zunahme des Transmembrandruckes (TMP = arithmetisches Mittel von Feed- und Retentatdruck minus Permeatdruck) die Wasserstoffpermeanz von 9,9 auf 5,9 Nm³/h/m²/bar und die Permselektivität von 930 auf 400 abnehmen.

Die Temperaturerhöhung bei einem konstanten Feed-/Retentatdruck von 7,1 bar absolut zeigt, dass sowohl der Fluss und die Permeanz vom Wasserstoff als auch die Wasserstoff zu Propan Permselektivität zunehmen.

**Tabelle 2**

| **I: Variation des Drucks** | | | | | | | | | | | | | | |
|---|---|---|---|---|---|---|---|---|---|---|---|---|---|---|
| Temperatur | Retentat Flux | Feed/Retentat | | | Permeat | | | | | | TMP | Permeanz P | | Permselectivität P(H2)/P(C3) |
| | | Druck | Konzentration | | Druck | Flux | Konzentration | | Flux | Flux | | | | |
| | | | C3 | H2 | | | C3 | H2 | C3 | H2 | | C3 | H2 | |
| (°C) | (Nm³/h) | (bar) | (vol%) | (vol%) | (bar) | (Nm³/h/m²) | (vol%) | (vol%) | (Nm³/h/m²) | (Nm³/h/m²) | (bar) | (Nm³/h/m²/bar) | | |
| 300 | 0,18 | 2,6 | 50,4 | 49,6 | 1,1 | 1,9 | 0,7 | 99,3 | 0,014 | 1,9 | 1,5 | 0,011 | 9,9 | 932 |
| 300 | 0,18 | 4,2 | 51,8 | 48,2 | 1,1 | 6,6 | 0,4 | 99,6 | 0,026 | 6,6 | 3,0 | 0,012 | 7,6 | 637 |
| 300 | 0,18 | 7,2 | 54,4 | 45,6 | 1,2 | 14,2 | 0,4 | 99,6 | 0,052 | 14,1 | 6,0 | 0,013 | 6,6 | 495 |
| 300 | 0,18 | 10,2 | 51,0 | 49,0 | 1,2 | 22,5 | 0,3 | 99,7 | 0,076 | 22,4 | 9,0 | 0,015 | 5,9 | 400 |

| **II: Variation der Temperatur** | | | | | | | | | | | | | | |
|---|---|---|---|---|---|---|---|---|---|---|---|---|---|---|
| Temperatur | Retentat Flux | Feed/Retentate | | | Permeat | | | | | | TMP | Permeanz P | | Permselectivität P(H2)/P(C3) |
| | | Druck | Konzentration | | Druck | Flux | Konzentration | | Flux | Flux | | | | |
| | | | C3 | H2 | | | C3 | H2 | C3 | H2 | | C3 | H2 | |
| (°C) | (Nm³/h) | (bar) | (vol%) | (vol%) | (bar) | (Nm³/h/m²) | (vol%) | (vol%) | (Nm³/h/m²) | (Nm³/h/m²) | (bar) | (Nm³/h/m²/bar) | | |
| 200 | 0,17 | 7,1 | 51,4 | 48,6 | 1,1 | 11,5 | 0,4 | 99,6 | 0,046 | 11,4 | 5,9 | 0,013 | 5,0 | 394 |
| 250 | 0,17 | 7,1 | 51,8 | 48,2 | 1,2 | 12,7 | 0,4 | 99,6 | 0,045 | 12,7 | 5,9 | 0,012 | 5,6 | 457 |
| 300 | 0,18 | 7,2 | 54,4 | 45,6 | 1,2 | 14,2 | 0,4 | 99,6 | 0,052 | 14,1 | 6,0 | 0,013 | 6,6 | 495 |
| 350 | 0,17 | 7,1 | 52,3 | 47,7 | 1,2 | 15,8 | 0,3 | 99,7 | 0,052 | 15,8 | 5,9 | 0,014 | 7,1 | 505 |

## Patentansprüche

1. Verwendung von Lösungen ethylenisch ungesättigter Polyester zur Herstellung von Kohlenstoffmembranen, die zur Gastrennung geeignet sind, wobei der ethylenisch ungesättigte Polyester Wiederholeinheiten aliphatischer Diole, aromatischer Dicarbonsäuren und ethylenisch ungesättigter Dicarbonsäuren aufweist.

2. Verwendung nach Anspruch 1, wobei die aliphatischen Diole C₂₋₁₂-Alkandiole sind.

3. Verwendung nach Anspruch 1, wobei die aliphatischen Diole C₂₋₆-Alkandiole sind.

4. Verwendung nach Anspruch 1, wobei die aliphatischen Diole C₂₋₄-Alkandiole sind.

5. Verwendung nach Anspruch 1, wobei die Kohlenstoffmembranen darüber hinaus folgende Trenneigenschaften für die Wasserstoffabtrennung aus einem Gasgemisch bei Temperaturen zwischen 150 bis 450 °C aus Gemischgasmessungen ermittelt aufweisen: Wasserstoffpermeanzen von ≥ 2 Nm³/m²/h/bar und Wasserstoffpermselektivitäten ≥ 30.

## Claims

1. The use of solutions of ethylenically unsaturated polyesters for production of carbon membranes suitable for gas separation, wherein the ethylenically unsaturated polyester has repeat units of aliphatic diols, aromatic dicarboxylic acids and ethylenically unsaturated dicarboxylic acids.

2. The use according to claim 1, wherein the aliphatic diols are C₂₋₁₂-alkanediols.

3. The use according to claim 1, wherein the aliphatic diols are C₂₋₆-alkanediols.

4. The use according to claim 1, wherein the aliphatic diols are C₂₋₄-alkanediols.

5. The use according to claim 1, wherein the carbon membranes additionally have the following separation properties for the separation of hydrogen from a gas mixture at temperatures between 150 and 450°C, determined from mixed gas measurements: hydrogen permeances of ≥ 2 m³ (STP)/m²/h/bar and hydrogen permselectivities ≥ 30.

## Revendications

1. Utilisation de solutions de polyester éthyléniquement insaturé pour la préparation de membranes carbonées, qui conviennent pour la séparation de gaz, le polyester éthyléniquement insaturé présentant des unités récurrentes de diols aliphatiques, d'acides dicarboxyliques aromatiques et d'acides dicarboxyliques éthyléniquement insaturés.

2. Utilisation selon la revendication 1, les diols aliphatiques étant des C₂₋₁₂-alcanediols.

3. Utilisation selon la revendication 1, les diols aliphatiques étant des C₂₋₆-alcanediols.

4. Utilisation selon la revendication 1, les diols aliphatiques étant des C₂₋₄-alcanediols.

5. Utilisation selon la revendication 1, les membranes carbonées présentant en outre les propriétés de séparation suivantes pour la séparation d'hydrogène d'un mélange gazeux à des températures entre 150 à 450°C, déterminées à partir de mesures sur des gaz mélangés : perméances d'hydrogène ≥ 2 Nm³/m²/h/bar et sélectivités de perméance d'hydrogène ≥ 30.
